# EUROPEAN PATENT SPECIFICATION

(11) **EP 3 626 024 B1**
(45) Date of publication and mention of the grant of the patent: **28.06.2023**
(21) Application number: 18738370.8
(22) Date of filing: 09.05.2018
(51) Int. Cl.: H04W 24/10, H04W 76/15

(54) **COORDINATION OF NEW RADIO MEASUREMENTS**
KOORDINATION VON NEW-RADIO-MESSUNGEN
COORDINATION DE MESURES NOUVELLE RADIO

(30) Priority: 15.05.2017 US 201762506293 P
(43) Date of publication of application: 25.03.2020
(73) Proprietor: Nokia Technologies Oy, 02610 Espoo (FI)
(72) Inventor: HE, Jing, Beijing 100102 (CN); WU, Chunli, Beijing 100096 (CN); HENTTONEN, Tero, 02320 Espoo (FI); ALI, Amaanat, 02250 Espoo (FI)
(74) Representative: Nokia EPO representatives
(86) International application number: PCT/FI2018/050345
(87) International publication number: WO 2018/211170

(56) References cited:
- EP-A1- 3 051 876
- WO-A1-2015/113600
- WO-A1-2016/171657
- US-A1- 2016 338 039
- CATT ET AL: "RLM considerations on the special cell of SCG", 3GPP DRAFT; R2-140180 RLM CONSIDERATIONS ON THE SPECIAL CELL OF SCG, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FR , vol. RAN WG2, no. Prague, Czech Republic; 20140210 - 20140214 29 January 2014 (2014-01-29), XP050753893, Retrieved from the Internet: URL:http://www.3gpp.org/ftp/tsg_ran/WG2_RL 2/TSGR2_85/Docs/ [retrieved on 2014-01-29]

## Description

### BACKGROUND:

### Field:

Various communication systems may benefit from improved measurements. For example, it may be helpful to improve coordination of new radio measurements between a master node and a secondary node.

### Description of the Related Art:

Recent third generation partnership project (3GPP) technology developments have focused on the interworking of fifth generation (5G) New Radio (NR) technology and other older existing 3GPP technology, such as Long Term Evolution (LTE) or LTE-Advanced (LTE-A). Dual connectivity (DC) procedures can be used between either nodes of the same technology, such as DC between two LTE nodes, or between nodes of different technologies, such as DC between an LTE node and an NR node. One node in the dual connectivity can function as a Master Node (MN) while another node functions as a Secondary Node (SN), also referred to as a slave node or a servant node.

MN may control the overall configuration of the UE, but depending on the type of dual connectivity may have more or less influence over the SN configuration and choices of serving cells in the SN. In particular, secondary node change or release procedures, such as a handover or Second Cell Group (SCG) change, in an interworking LTE - NR environment are being examined. The determination to change or release a secondary node may be initiated by a master node or a secondary node. The master node may receive a request to change or release the secondary node, and then either accept or reject the requested change.

As part of the determination, the master node may take into account available information and network interconnection. Based on the measurements available at the master node itself, the master may determine whether to select a different target secondary node in a different carrier frequency, and change the current secondary node to the target node. In an LTE - NR environment, the master node may use NR inter-frequency measurements maintained by master itself as part of the determination. The master node can alternatively trigger an intra-frequency or inter-frequency secondary node change without any request from the secondary node. The final radio resource control (RRC) message for the secondary node change or release is then sent from the master node to the user equipment. Documents WO2015113600A1, WO2016171657A1, R2-140180, EP3051876 and US2016338039A1 discuss issues relating to dual connectivity and/or measurement reports.

### SUMMARY

According to some aspects, the subject-matter of the invention is defined in the independent claims. Some further aspects are defined in the dependent claims.

### BRIEF DESCRIPTION OF THE DRAWINGS:

For proper understanding of the invention, reference should be made to the accompanying drawings, wherein:
Figure 1 illustrates an example of a signal flow diagram according to certain embodiments.
Figure 2 illustrates an example of a signal flow diagram according to certain embodiments.
Figure 3 illustrates an example of a signal flow diagram according to certain embodiments.
Figure 4 illustrates an example of a signal flow diagram according to certain embodiments.
Figure 5 illustrates an example of a signal flow diagram according to certain embodiments.
Figure 6 illustrates an example of a method according to certain embodiments.
Figure 7 illustrates an example of a method according to certain embodiments.
Figure 8 illustrates an example of a system according to certain embodiments.

### DETAILED DESCRIPTION

In certain embodiments, the MN and the SN may coordinate measurements and/or recommendations using a handshake mechanism in which one node requests coordination and the other node chooses whether to accept the request. The master node may be a base station, for example an LTE evolved NodeB (eNB), while the secondary node may be a base station, for example a 5G or a NR NodeB (gNB). The master node may use the measurements and/or recommendations received from the secondary node, when available, in order to determine a target cell, node, or base station for the secondary node. When the secondary node partakes in the determination of which cell and/or node may be used, the master node may account for the measurements and/or recommendations of the secondary node. The master node may therefore prevent an inadvertent release of the secondary node, or a change of the secondary node to a different target node, when the secondary node may not have the same information as the master node.

The secondary node change may be either an inter-frequency or an intra-frequency change. In some embodiments, the inter-frequency change may include an interworking between the LTE and NR technology, the MN, which may be for example an LTE eNB, may receive measurement reports upon the occurrence of certain events. The events may be predetermined and configured by the network. The MN may receive measurement reports from the SN and/or from a user equipment (UE), while the SN may receive measurement reports from the UE. For example, event B 1 may refer to an inter radio access technology (RAT) neighbor reporting better than a configured threshold. When event B 1 occurs, the MN may add one NR node, such as a gNB, as a secondary node. Event B2, on the other hand, may refer to when a primary cell becomes worse than a given threshold, and an inter-RAT neighbor becomes better than another threshold. When event B2 occurs, MN may trigger an inter-RAT mobility from LTE to NR.

Other events may include event X1, in which the quality of all NR secondary cells belonging to the SCG, become worse than a threshold, and event X2, in which the quality of all secondary group cells in the SCG become worse than a first threshold, and an NR neighbor cell becomes better than a second threshold. The second threshold may therefore be different, for example, lower than the first threshold. When event X1 occurs the MN may release the secondary node. When X2 occurs, however, the MN may trigger the SN change procedure to change the currently used SN to another SN.

The SN, for example a gNB, may also receive one or more measurement reports when certain events occur. The measurement reports may be received from the user equipment. The events may be predetermined and configured by the internet service provider, network manager, or an operation and maintenance center. Event A1 may refer to the quality of the serving cell becoming better than a threshold, while event A2 may refer to the quality of the serving cell becoming worse than a threshold. Event A3 may occur when the neighbor cell becomes offset better than a primary cell or a serving cell, and event A4 may occur when the neighbor cell becomes better than a predetermined threshold. In addition, event A5 may occur when the primary or secondary cell becomes worse than a first threshold, and the neighbor becomes better than a second threshold. Event A6, on the other hand, may occur when the neighbor node becomes offset better than the serving cell.

In LTE DC, only the MN configures measurements. However, with the principle of independent configurations applied in LTE, the MN and the SN may coordinate measurements independently of each other. The MN and the SN may therefore set up mutually exclusive measurements and mutually exclusive measurement configurations. Some of the measurement events of the MN and the SN may overlap, for example X1 and A2 may overlap and X2 and A5 may overlap. Configuring measurements without coordination between MN and SN may lead MN to make conflicting decisions in LTE-NR tight interworking. The conflicting decisions may become exacerbated in an intervendor scenario, in which the MN and the SN belong to different vendors.

The MN may configure an event X1 for the user equipment, while the SN may configure an event A4 for the same user equipment simultaneously. Because no coordination between the MN and the SN is performed, the user equipment may perform these measurements and trigger reports to MN and/or SN independently. When the triggered X1 report arrives at the MN, and no available target SN information is reported to the MN, the MN may release the SN based on the received X1 report. Meanwhile, the A4 report may arrive at the SN, and based on the A4 report the SN may initiate a change request. The change request may collide with the SN release from the MN. The lack of coordination between the MN and the SN will therefore lead to conflicting determinations by the MN and the SN that may negatively impact the UE throughput.

Certain embodiments resolve the above conflicts by employing a handshake mechanism between the MN and SN in case of inter-frequency interworking, such as LTE-NR tight interworking that uses either an LTE MN or an NR MN. In other embodiments, any other combination of radio access technologies may be used. For example, some embodiments may relate to the interworking between 5G technology and future technologies, such as sixth generation technology. The above embodiments may lead to more balanced behavior at the system level by allowing the MN to account for measurements and/or recommendations received from the SN when determining to release the secondary node or change the secondary node. The MN and the SN may therefore coordinate measurement events, threshold configuration, and/or measurement results before making a determination on the secondary node.

In some embodiments, the MN may request the SN to report the measurement results and/or recommended target node, or one or more target cells. The recommended target node may be a node to which the MN may initiate a handover and/or SCG change of the user equipment from the current serving secondary node. The request may, in certain embodiments, take the form of an "Initiate SN change" message. The request may not include a target candidate cell, but may prompt the SN to consult radio resource management (RRM) in order to determine an appropriate action. For example, an appropriate action may be for the SN to use its own measurement information and/or request the user equipment to perform measurements. An appropriate action, for example, may also be for the SN to wait for a period of time before recommending the target cell. Otherwise, the SN may immediately indicate to the MN to release the SN. In some other embodiments, the SN may ask the MN to wait for a predetermined period of time before the SN sends the measurement results and/or the recommendation for the target cell. The predetermined period of time may be signaled between the MN and the SN.

As discussed above, the SN may transmit a recommendation to the MN. The recommendation may be whether or not to change the secondary node to a target node or base station. If the recommendation is to change the serving cell of the SN, the recommendation may also include the identity of the target cell.

A timer may be sent from the MN to the SN. In certain embodiments the timer may be included as part of the request sent from the MN to the SN. The timer may define a waiting timer value that indicates a time period after which the master node may not accept the measurement results or may not accept the recommendation for the target cell from the secondary node. After the expiration of the timer, the MN determines to release the SN or to change the SN without taking into account any information received from the SN.

The MN may set up dual connectivity with the SN. During the setup of the dual connectivity, an initial configuration may be exchanged between the MN and the SN over the X2/Xn interface, or any other available interface. The initial configuration may include at least an event and/or a threshold that triggers the user equipment to perform measurements. In other embodiments, the SN may configure at least an event and/or a threshold that triggers the user equipment to perform measurements. In other words, when the MN or the SN configures measurement events and/or threshold relating to the user equipment, the information may be exchanged between the SN and the MN through the X2/Xn or any other interface. The performed measurements may then be sent directly to the MN or to the MN through the SN.

In certain embodiments, the MN may receive measurement reports from the SN but not a recommendation. In other words, the MN may receive a measurement report from the SN, without receiving a recommendation that indicates whether to change the SN to a target node. Before releasing the SN, the MN may send another request or another inquiry to the SN asking the SN for a recommendation on the target cell or node. If the SN has no recommendation for a target cell or node, the SN may reply with an SN release to the MN. In addition, if the SN does not reply to the MN's request or inquiry, the MN may proceed using only the measurements already received by the MN itself.

As discussed above, the MN may include a waiting timer value in the request being sent to the SN. The waiting timer may indicate that the MN would like an action from the SN before the timer expires. The timer value set by the MN, and may be greater than or equal to zero seconds. When the MN wishes for an immediate reply or does not need a reply at all, the timer value may be close to zero or zero, respectively.

When thresholds are exchanged between MN and SN, if the MN configures an event X1, in which all NR secondary cells become worse than a first threshold, the MN may also inform the first threshold to the SN. The SN, in certain embodiments, may then select one appropriate threshold value for A2 or A4, and ensure that A2 or A4 measurement reports may be triggered by the SN before the event X1 report may be triggered to MN. In accordance with the above embodiments, the MN may avoid the releasing of the SN before the SN change procedure.

In certain embodiments, during the exchange of measurement configurations between the MN and the SN, the MN may configure events B1 and X1. When the SN is aware or has knowledge that the configured events are B1 and X1, the SN may avoid configuring series A events to the user equipment. Avoiding conflicting measurements reports may help to reduce the amount of network resources that are spent on sending measurement reports, and prevent the need for further coordination between the MN and the SN. Certain embodiments, therefore, provide significant improvements to the functioning of a network and/or to the functioning of the network entities within the network, or the user equipment communicating with the network.

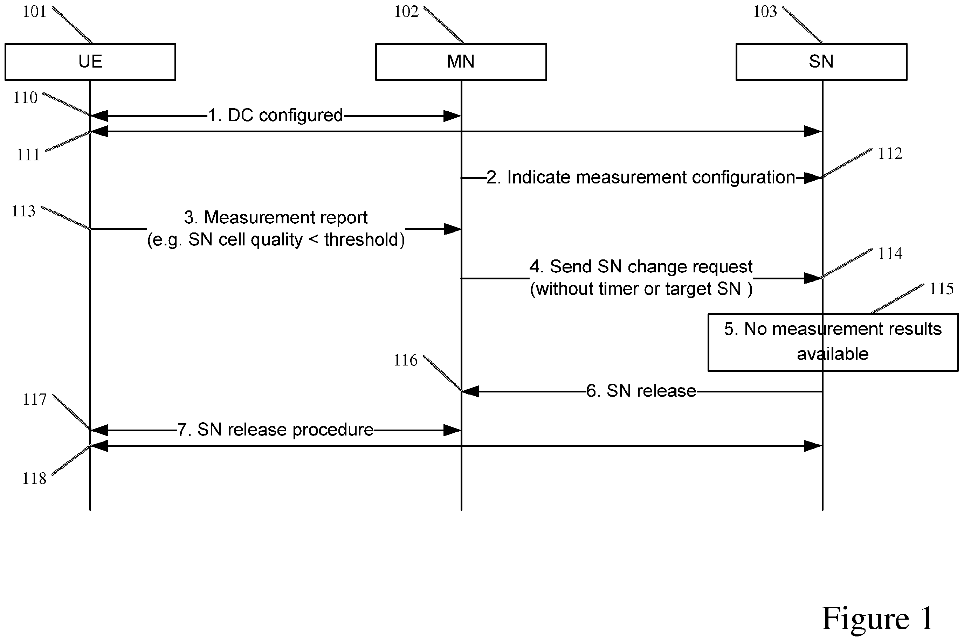

Figure 1 illustrates an example of a signal flow diagram. particular, Figure 1 illustrates an example in which a secondary node release message is sent to the master node. In step 110, dual connectivity may be configured between a user equipment 101 and a MN 102. Dual connectivity may also be configured between user equipment 101 and a SN 103, as shown in step 111. In step 112, MN 102 may indicate or send a measurement configuration to SN 103. When a certain event occurs, for example the quality of the secondary cell becomes lower than a predetermined threshold, user equipment 101 may transmit a measurement report to MN 102, as shown in step 113.

In step 114, MN 102 may send SN 103 a request, such as an SN change request. In the example shown in Figure 1, the request may not include a timer or a target SN. In step 115, SN 103 may not have any measurement results available. SN 103 may then send MN 102 a message including measurement results or a recommendation for a target node. The message shown in Figure 1 indicates that the SN may be released in response to determining that no measurement results are available, as shown in step 116. In other embodiments, SN 103 may send a message directly to MN 102 indicating that the SN may be released. MN 102 may then initiate an SN release procedure with UE 101, as shown in step 117. UE 101 may then, in step 118, inform SN 103 that the SN has been released.

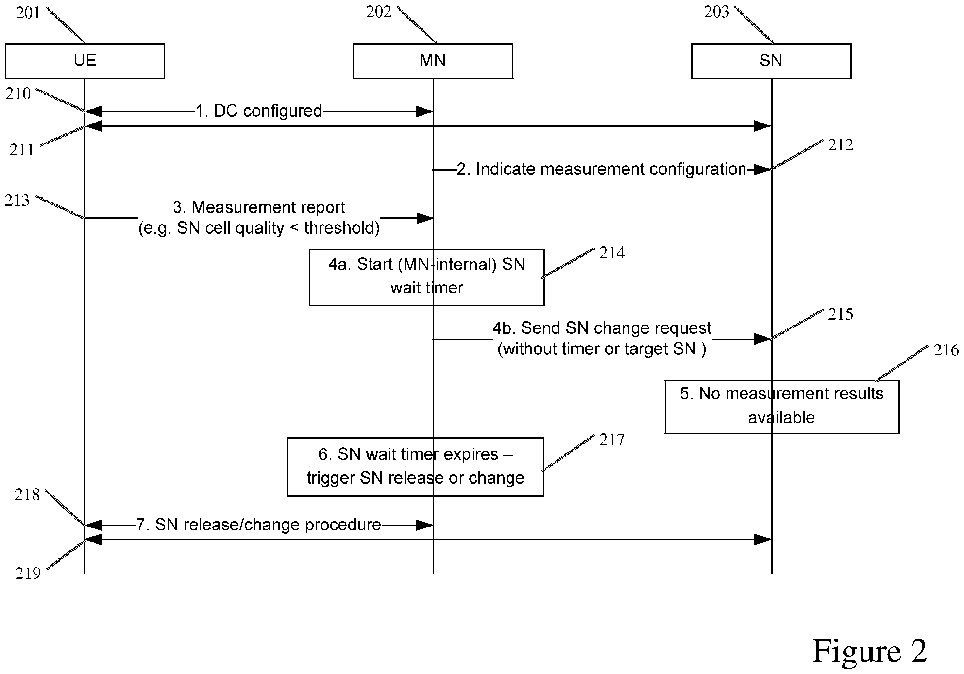

Figure 2 illustrates an example of a signal flow diagram according to certain embodiments. In particular, Figure 2 illustrates an embodiment of a secondary node that does not respond to the request from MN 202. In step 210, dual connectivity may be configured between a user equipment 201 and a MN 202. Dual connectivity may also be configured between user equipment 201 and a SN 203, as shown in step 211. In step 212, MN 202 may indicate or send a measurement configuration to SN 203. When a certain event takes place, for example the quality of the secondary cell becomes lower than a predetermined threshold, user equipment 201 may transmit a measurement report to MN 202, as shown in step 213.

In step 214, MN 202 starts an internal wait timer for the SN. In step 215, MN 202 may then send a request, such as an SN change request, to SN 203. SN 203 may not have any measurements results available, as shown in step 216. In step 217, the SN wait timer expires, and the SN release or change is triggered, even without MN 202 receiving feedback from SN 203. MN 202 may then initiate an SN release or change procedure with UE 201, as shown in step 218. UE 201 may, in step 219, inform SN 203 that the SN has been released or changed.

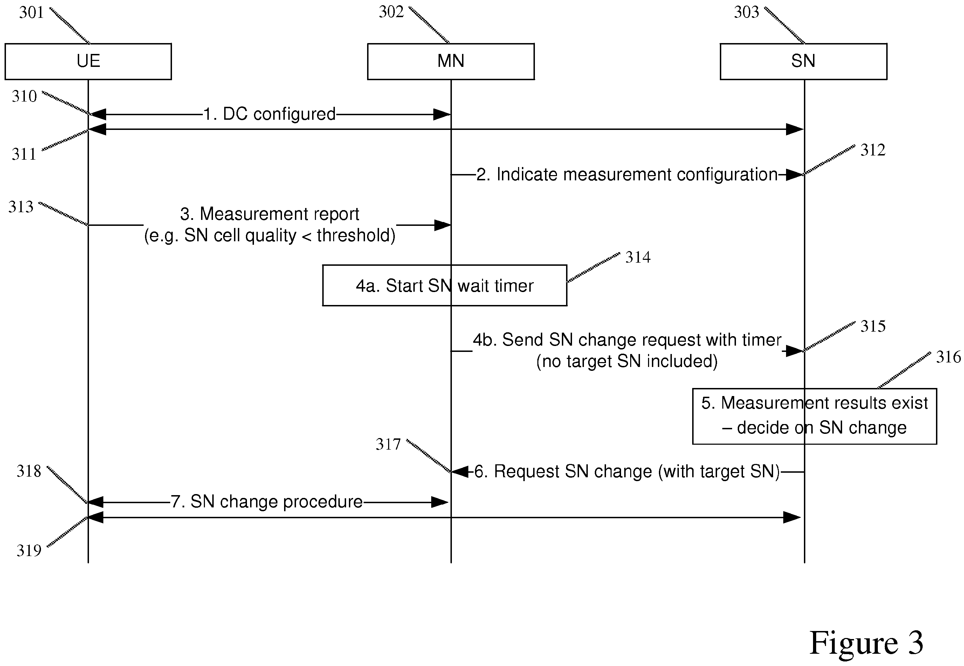

Figure 3 illustrates an example of a signal flow diagram according to certain embodiments. In particular, Figure 3 illustrates an embodiment in which measurement results are available and SN 303 sends MN 302 a recommendation for a target node. In step 310, dual connectivity may be configured between a user equipment 301 and a MN 302. Dual connectivity may also be configured between user equipment 301 and SN 303, as shown in step 311. In step 312, MN 302 may indicate or send a measurement configuration to SN 303. When a certain event takes place, for example the secondary cell quality becomes lower than a predetermined threshold, user equipment 301 may transmit a measurement report to MN 302, as shown in step 313.

In step 314, MN 302 may start an internal wait timer for the SN. MN 302 may then, in step 315, send a request, such as an SN change request, to SN 303. The request may include the wait timer, but may not include the target node. SN 303 may have access to measurement results, and may decide whether or not to recommend a target node, as shown in step 316. In certain embodiments, the recommendation may be at least based on the measurement results.

In step 317, SN 303 may send MN 302 the recommendation for the target cell or the recommendation to change an SN, the timer is stopped at MN. The recommendation in step 317 may, in certain embodiments, immediately be sent after the request is received from MN 302. Immediately sent may in some embodiments mean that the recommendation is sent after the SN has processed the MN message without any timer. Because the recommendation may be sent immediately, the SN wait timer may not expire before the recommendation is sent. MN 302 may then initiate an SN change procedure with UE 301 based on the received recommendation or MN internal information, as shown in step 318. The MN internal information may be, for example, other measurement results of candidate SN cells or nodes or knowledge of deployments, such as which SNs are neighbors for the current SN. UE 301 may then, in step 319, inform SN 303 that the SN change has been completed.

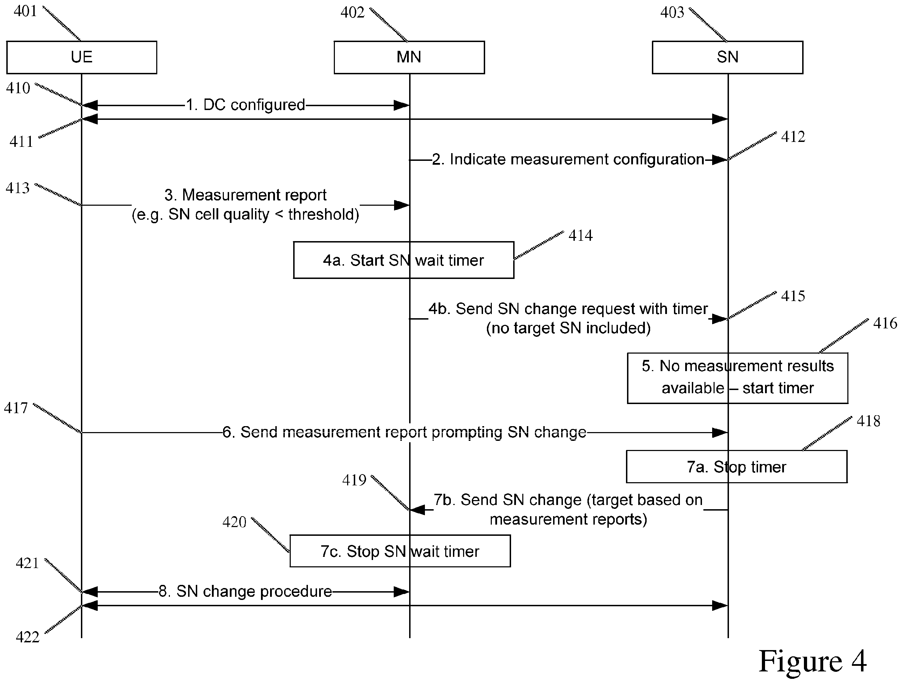

Figure 4 illustrates an example of a signal flow diagram according to certain embodiments. In particular, Figure 4 illustrates an embodiment in which SN 403 does not have measurement results available when getting the message from the MN, but the SN 403 may manage to send MN 402 a recommendation for a target cell upon later received measurement results from the UE before a timer expires. In step 410, dual connectivity may be configured between a user equipment 401 and a MN 402. Dual connectivity may also be configured between user equipment 401 and a SN 403, as shown in step 411. In step 412, MN 402 may indicate or send a measurement configuration to SN 403. When a certain event occurs, for example the secondary cell quality may be lower than a predetermined threshold, user equipment 401 may transmit a measurement report to MN 402, as shown in step 413. In step 414, MN 402 may start an internal wait timer for the SN. In step 415, MN 402 may send a request, such as an SN change request, to SN 403. The request may include the wait timer, but may not include the target cell.

As shown in step 416, no measurement results may be available at SN 403. SN 403 may then start a wait timer, which was received from MN 402 in step 415. In step 417, UE 401 may send a measurement report to SN 403. When the timer is included in the request sent from MN 402 to SN 403, SN 403 may use the timer to ensure reaction before the timer expires. The measurement report sent from UE 401 to SN 403 may prompt a SN change. The wait timer may then be stopped, in step 418, after SN 403 receives the measurement report. In step 419, SN 403 may send a recommendation for a target cell or a SN change based on the measurement reports to MN 402. The recommendation may be determined by SN 403 based on the measurement report received in step 417. MN 402 may then stop the SN wait timer in step 420, after MN 402 receives the recommendation from SN 403. MN 402 may then initiate an SN change procedure with UE 401 based on the recommendation, as shown in step 421. UE 401 may then, in step 422, inform SN 403 that the SN change has been completed.

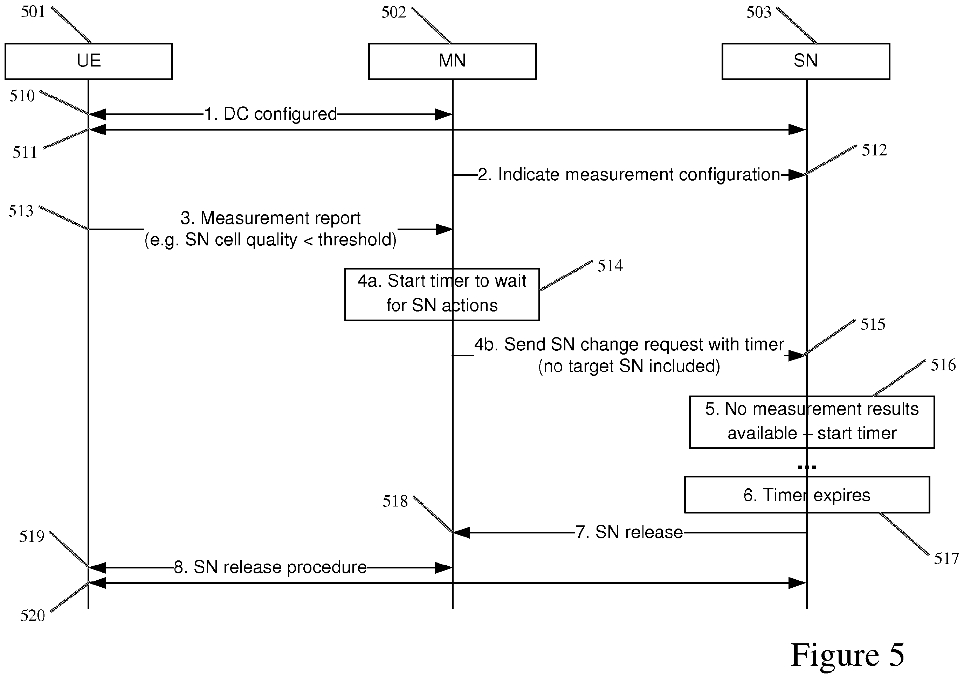

Figure 5 illustrates an example of a signal flow diagram according to certain embodiments. In particular, Figure 5 illustrates an embodiment in which a wait timer expires and SN 503 sends MN 502 an SN release message. In step 510, dual connectivity may be configured between a user equipment 501 and a MN 502. Dual connectivity may also be configured between user equipment 501 and a SN 503, as shown in step 511. In step 512, MN 502 may indicate or send a measurement configuration to SN 503. When a certain event occurs, for example the quality of the secondary cell may be lower than a predetermined threshold, user equipment 501 may transmit a measurement report to MN 502, as shown in step 513. In step 514, MN 502 may start an internal wait timer for the SN. In step 515, MN 502 may send a request, for example an SN change request, to SN 503. The request may include the wait timer, but may not include the target cell.

As shown in step 516, no measurement results may be available at SN 503. SN 503 may then start a wait timer, which was received at SN 503 from MN 502. In step 517, the wait timer may expire without any measurement results having been received from UE 501, and SN 503 may send an SN release message to MN 502, as shown in step 518. MN 502 may then initiate an SN release procedure with UE 501, as shown in step 519. UE 501 may then, in step 520, inform SN 503 that the SN has been released.

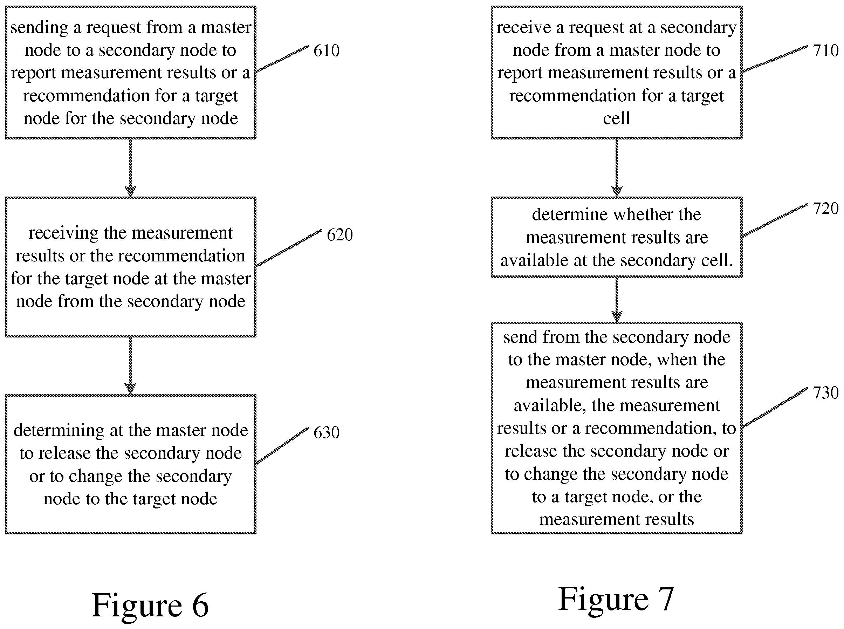

Figure 6 illustrates an example of a method according to certain embodiments. In particular, Figure 6 illustrates a method performed by a master node, for example a gNB or an eNB. In step 610, the master node sends a request from a master node to a secondary node to report measurement results or a recommendation for a target node for the secondary node. The master node waits to receive the measurement results or the recommendation for the target cell from the secondary node. The request may be sent from the master node to the secondary node via an X2/Xn interface. The request may comprise a waiting timer value. The waiting timer value may indicate a time period after which the master node may determine to release the secondary node or change the secondary node to the target cell, even when the measurement results or the recommendation for the target cell were not received from the secondary node

In step 620, the master node may receive the measurement results or the recommendation for the target node at the master node from the secondary node. In step 630, the master node determines at the master node to release the secondary node or to change the secondary node to the target node. The determining to release the secondary node or change the secondary node to the target cell may be based at least on the measurement results or the recommendation of the secondary node. The method may also send another request from the master node to the secondary node based on the measurement results. The another request may include an indication for the secondary node to send the recommendation for the target node at the master node.

Figure 7 illustrates an example of a method according to certain embodiments. In particular, Figure 7 illustrates a method performed by a secondary node or a servant node, for example a gNB or an eNB. In step 710, the secondary node receives a request at a secondary node from a master node to report measurement results or a recommendation for a target node or cell. The master node waits to receive the measurement results or the recommendation for the target node or cell from the secondary node. The secondary node may send a message from the secondary node to a user equipment requesting that the user equipment perform measurements, and may receive the measurements at the secondary node from the user equipment. The secondary node may also prepare at the secondary node the measurement results or the recommendation for the target cell based on the measurements.

In step 720, the secondary node determines whether the measurement results are available at the secondary node. In step 730, the secondary node sends to the master node, when the measurement results are available, the measurement results or a recommendation to release the secondary node or to change the secondary node to a target node.

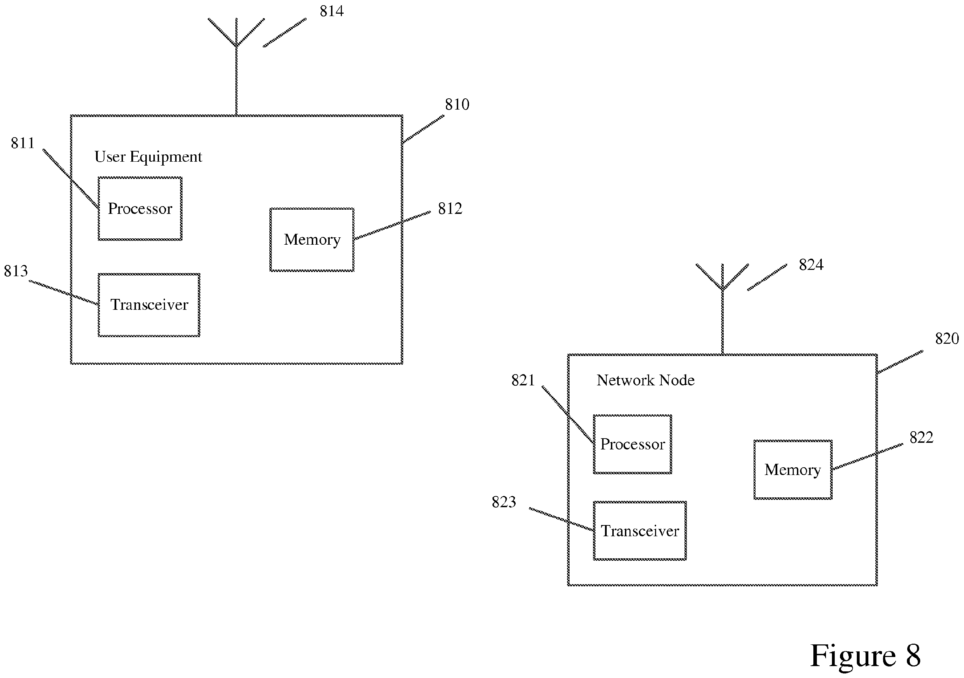

Figure 8 illustrates a system according to certain embodiments. It should be understood that each signal or block in Figures 1-7 may be implemented by various means or their combinations, such as hardware, software, firmware, one or more processors and/or circuitry. In one embodiment, a system may include several devices, such as, for example, network node 820 or user equipment (UE) 810. The system may include more than one UE 810 and more than one network node 820. Network Node 820 may be a base station, an access point, an access node, a gNB, an eNB, a server, a host, or any other network core entity that may communicate with the UE. The network node may either be a secondary node, also known as a servant node, or a master node.

Each of these devices may include at least one processor or control unit or module, respectively indicated as 811 and 821. At least one memory may be provided in each device, and indicated as 812 and 822, respectively. The memory may include computer program instructions or computer code contained therein. One or more transceiver 813 and 823 may be provided, and each device may also include an antenna, respectively illustrated as 814 and 824. Although only one antenna each is shown, many antennas and multiple antenna elements may be provided to each of the devices. Other configurations of these devices, for example, may be provided. For example, network node 820 and UE 810 may be additionally configured for wired communication, in addition to wireless communication, and in such a case antennas 814 and 824 may illustrate any form of communication hardware, without being limited to merely an antenna.

Transceivers 813 and 823 may each, independently, be a transmitter, a receiver, or both a transmitter and a receiver, or a unit or device that may be configured both for transmission and reception. The transmitter and/or receiver (as far as radio parts are concerned) may also be implemented as a remote radio head which is not located in the device itself, but in a mast, for example. The operations and functionalities may be performed in different entities, such as nodes, hosts or servers, in a flexible manner. In other words, division of labor may vary case by case. One possible use is to make a network node deliver local content. One or more functionalities may also be implemented as virtual application(s) in software that can run on a server.

A user device or UE 810 may be a mobile station (MS) such as a mobile phone or smart phone or multimedia device, an IoT cellular device, a computer, such as a tablet, provided with wireless communication capabilities, personal data or digital assistant (PDA) provided with wireless communication capabilities, portable media player, digital camera, pocket video camera, navigation unit provided with wireless communication capabilities or any combinations thereof. In other embodiments, the user equipment may be replaced with a machine communication device that does not require any human interaction, such as a sensor, meter, or robot.

In some embodiments, an apparatus, such as a user equipment or a network node, may include means for carrying out embodiments described above in relation to Figures 1-7. In certain embodiments, at least one memory including computer program code can be configured to, with the at least one processor, cause the apparatus at least to perform any of the processes described herein.

Processors 811 and 821 may be embodied by any computational or data processing device, such as a central processing unit (CPU), digital signal processor (DSP), application specific integrated circuit (ASIC), programmable logic devices (PLDs), field programmable gate arrays (FPGAs), digitally enhanced circuits, or comparable device or a combination thereof. The processors may be implemented as a single controller, or a plurality of controllers or processors.

For firmware or software, the implementation may include modules or unit of at least one chip set (for example, procedures, functions, and so on). Memories 812 and 822 may independently be any suitable storage device, such as a non-transitory computer-readable medium. A hard disk drive (HDD), random access memory (RAM), flash memory, or other suitable memory may be used. The memories may be combined on a single integrated circuit as the processor, or may be separate therefrom. Furthermore, the computer program instructions may be stored in the memory and which may be processed by the processors can be any suitable form of computer program code, for example, a compiled or interpreted computer program written in any suitable programming language. The memory or data storage entity is typically internal but may also be external or a combination thereof, such as in the case when additional memory capacity is obtained from a service provider. The memory may be fixed or removable.

The memory and the computer program instructions may be configured, with the processor for the particular device, to cause a hardware apparatus such as network node 820 or UE 810, to perform any of the processes described above (see, for example, Figures 1-7). Therefore, in certain embodiments, a non-transitory computer-readable medium may be encoded with computer instructions or one or more computer program (such as added or updated software routine, applet or macro) that, when executed in hardware, may perform a process such as one of the processes described herein. Computer programs may be coded by a programming language, which may be a high-level programming language, such as objective-C, C, C++, C#, Java, etc., or a low-level programming language, such as a machine language, or assembler. Alternatively, certain embodiments may be performed entirely in hardware.

In certain embodiments, an apparatus may include circuitry configured to perform any of the processes or functions illustrated in Figures 1-7. Circuitry, in one example, may be hardware-only circuit implementations, such as analog and/or digital circuitry. Circuitry, in another example, may be a combination of hardware circuits and software, such as a combination of analog and/or digital hardware circuit(s) with software or firmware, and/or any portions of hardware processor(s) with software (including digital signal processor(s)), software, and at least one memory that work together to cause an apparatus to perform various processes or functions. In yet another example, circuitry may be hardware circuit(s) and or processor(s), such as a microprocessor(s) or a portion of a microprocessor(s), that include software, such as firmware for operation. Software in circuitry may not be present when it is not needed for the operation of the hardware.

The above embodiments may provide for significant improvements to the functioning of a network and/or to the functioning of the network entities within the network, or the user equipment communicating with the network. For example, the above embodiments may allow for a handshake between the MN and SN to coordinate and prevent conflicting decisions between the MN and the SN. The MN may therefore take into account a measurement report and/or a recommendation from the SN when determining whether or not to release the SN or to change the SN to a target cell or a target node. Avoiding conflicting measurements reports may help to reduce the amount of network resources spent on sending measurement reports, and prevent the need for further coordination between the MN and the SN.

The features, structures, or characteristics of certain embodiments described throughout this specification may be combined in any suitable manner in one or more embodiments. For example, the usage of the phrases "certain embodiments," "some embodiments," "other embodiments," or other similar language, throughout this specification refers to the fact that a particular feature, structure, or characteristic described in connection with the embodiment may be included in at least one embodiment of the present invention. Thus, appearance of the phrases "in certain embodiments," "in some embodiments," "in other embodiments," or other similar language, throughout this specification does not necessarily refer to the same group of embodiments, and the described features, structures, or characteristics may be combined in any suitable manner in one or more embodiments.

One having ordinary skill in the art will readily understand that the invention as discussed above may be practiced with steps in a different order, and/or with hardware elements in configurations which are different than those which are disclosed. Although the above embodiments refer to 5G NR and LTE technology, the above embodiments may also apply to any other present or future 3GPP technology, such as IoT technology, LTE-advanced, and/or fourth generation (4G) technology.

### Partial Glossary

- DC: Dual Connectivity
- eNB: Evolved Node-B
- EN-DC: E-UTRAN-NR Dual Connectivity
- E-UTRAN: Evolved Universal Terrestrial Radio Access Network
- gNB: 5G Node-B
- LTE: Long Term Evolution
- MCG: Master Cell Group
- MN: Master Node
- NR: New Radio
- RAT: Radio Access Technology
- SCG: Secondary Cell Group
- SgNB: Secondary gNB
- SN: Secondary Node
- UE: User Equipment

## Claims

1. An apparatus comprising:
means for receiving (213, 313, 413, 513), at a master node (502), a measurement report from a user equipment (501);
the apparatus further comprises:
means for sending (610) a request (215, 315, 415, 515) from the master node (502) to a secondary node (503) to report at least one of measurement results or a recommendation for a target node for the secondary node (503), means for the master node (502) to wait a predetermined time period to receive the measurement results or the recommendation for the target node from the secondary node (503); and
**characterised by** means for determining (630) at the master node (502) to release the secondary node or to change the secondary node to the target node after waiting the predetermined time period, even when the measurement results or the recommendation for the target node are not received from the secondary node (503).

2. The apparatus according to claim 1, further comprising:
means for receiving (620) the measurement results or the recommendation for the target node at the master node (502) from the secondary node (503), wherein the determining to release the secondary node or to change the secondary node to the target node is based at least on the received measurement results or the recommendation of the secondary node (503).

3. The apparatus according to claim 1 or 2, wherein the request is sent from the master node (502) to the secondary node (503) via an interface between the master node (502) and the secondary node (503).

4. The apparatus according to any of claims 1-3, further comprising:
means for indicating via a waiting timer value the predetermined time period after which the master node (502) determines to release the secondary node or to change the secondary node to the target node, even when the measurement results or the recommendation for the target node are not received from the secondary node (503).

5. The apparatus according to claim 4, wherein the waiting timer value is comprised in the request (315, 415, 515).

6. The apparatus according to any of claims 1-5, further comprising:
means for transmitting a measurement configuration from the master node (502) to the secondary node (503) or the user equipment (501), wherein the measurement configuration comprises at least one of an event or a threshold that triggers the user equipment (501) to perform measurements.

7. The apparatus according to claim 6, wherein the measurement configuration is determined by the master node (502) for the user equipment (501).

8. The apparatus according to any of claims 1-7, further comprising:
means for releasing a source cell based at least on the measurement results or the recommendation of the secondary node (503).

9. The apparatus according to any of claims 1-8, further comprising:
means for initiating a transfer of the user equipment (501) from the secondary (503) node to another secondary node based on the determination of the master node (502).

10. The apparatus according to any of claims 1-9, wherein the master node (502) is a long term evolution node, and the secondary node (503) is a new radio node; or wherein the master node (502) is a new radio node, and wherein the secondary node (503) is a long term evolution node; or
wherein the master node (502) and the secondary node (503) are new radio nodes.

11. The apparatus according to any of claims 1-10, further comprising:
means for sending another request from the master node (502) to the secondary node (503) based on the measurement results, wherein the another request comprises an indication for the secondary node (503) to send the recommendation for the target node at the master node (502).

12. An apparatus comprising:
means for receiving (710) a request at a secondary node (503) from a master node (502) to report measurement results or a recommendation for a target cell, wherein the request comprises an indication of a predetermined time duration within which the reporting of the measurement results or the recommendation for the target cell is to be performed;
means for determining (720) whether the measurement results are available at the secondary node (503); and
**characterised by**
means for sending (730) from the secondary node (503) to the master node (502), only when the measurement results are available within the predetermined time duration, the measurement results or the recommendation to release the secondary node or to change the secondary node to a target node.

13. The apparatus according to claim 12, further comprising:
means for sending a message from the secondary node (503) to a user equipment (501) requesting that the user equipment (501) perform measurements;
means for receiving the measurements at the secondary node (503) from the user equipment (501); and
means for preparing at the secondary node (503) the measurement results or the recommendation for the target node based on the measurements.

14. The apparatus according to any of claims 12-13, comprising:
means for receiving a measurement configuration from the master node (502) at the secondary node (503), wherein the measurement configuration comprises at least one of an event or a threshold that triggers the secondary node (503) or the user equipment (501) to perform measurements.

15. A method, comprising:
receiving (213, 313, 413, 513) a measurement report from a user equipment (501);
the method further comprises:
sending (610) a request (215, 315, 415, 515) to a secondary node (503) to report at least one of measurement results or a recommendation for a target node for the secondary node (503), wherein the master node (502) waits a predetermined time period to receive the measurement results or the recommendation for the target node from the secondary node (503); and
**characterised by** determining (630) to release the secondary node (503) or to change the secondary node (503) to the target node after waiting the predetermined time period, even when the measurement results or the recommendation for the target node are not received from the secondary node (503).

## Patentansprüche

1. Vorrichtung, die Folgendes umfasst:
Mittel zum Empfangen (213, 313, 413, 513) eines Messberichts an einem Masterknoten (502) von einer Teilnehmereinrichtung (501);
die Vorrichtung umfasst ferner Folgendes
Mittel zum Senden (610) einer Anforderung (215, 315, 415, 515) vom Masterknoten (502) an einen sekundären Knoten (503), um mindestens eines von Messergebnissen oder einer Empfehlung für einen Zielknoten für den sekundären Knoten (503) zu melden,
Mittel zum Warten seitens des Masterknotens (502) über eine vorbestimmte Zeitperiode, um die Messergebnisse oder die Empfehlung für den Zielknoten vom sekundären Knoten (503) zu empfangen; und
**gekennzeichnet durch**
Mittel zum Bestimmen (630) am Masterknoten (502) nach Warten über die vorbestimmte Zeitperiode, den sekundären Knoten freizugeben oder den sekundären Knoten in den Zielknoten zu ändern, auch wenn die Messergebnisse oder die Empfehlung für den Zielknoten vom sekundären Knoten (503) nicht empfangen werden.

2. Vorrichtung nach Anspruch 1, die ferner Folgendes umfasst:
Mittel zum Empfangen (620) der Messergebnisse oder der Empfehlung für den Zielknoten am Masterknoten (502) vom sekundären Knoten (503), wobei das Bestimmen, den sekundären Knoten freizugeben oder den sekundären Knoten in den Zielknoten zu ändern, mindestens auf den Messergebnissen oder der Empfehlung des sekundären Knotens (503) basiert.

3. Vorrichtung nach Anspruch 1 oder 2, wobei die Anforderung vom Masterknoten (502) via eine Schnittstelle zwischen dem Masterknoten (502) und dem sekundären Knoten (503) an den sekundären Knoten (503) gesendet wird.

4. Vorrichtung nach einem der Ansprüche 1-3, das ferner Folgendes umfasst:
Mittel zum Anzeigen der vorbestimmten Zeitperiode via einen Wartetimerwert, nach der der Masterknoten (502) bestimmt, den sekundären Knoten freizugeben oder den sekundären Knoten in den Zielknoten zu ändern, auch wenn die Messergebnisse oder die Empfehlung für den Zielknoten vom sekundären Knoten (503) nicht empfangen werden.

5. Vorrichtung nach Anspruch 4, wobei der Wartetimerwert in der Anforderung (315, 415, 515) umfasst ist.

6. Vorrichtung nach einem der Ansprüche 1-5, die ferner Folgendes umfasst:
Mittel zum Übertragen einer Messauslegung vom Masterknoten (502) zum sekundären Knoten (503) oder zur Teilnehmereinrichtung (501), wobei die Messauslegung mindestens eines von einem Ereignis oder einem Schwellwert umfasst, das bzw. der das Durchführen von Messungen durch die Teilnehmereinrichtung (501) auslöst.

7. Vorrichtung nach Anspruch 6, wobei die Messauslegung vom Masterknoten (502) für die Teilnehmereinrichtung (501) bestimmt wird.

8. Vorrichtung nach einem der Ansprüche 1-7, die ferner Folgendes umfasst:
Mittel zum Freigeben einer Quellzelle mindestens auf Basis der Messergebnisse oder der Empfehlung des sekundären Knotens (503) .

9. Vorrichtung nach einem der Ansprüche 1-8, die ferner Folgendes umfasst:
Mittel zum Initiieren einer Übergabe der Teilnehmereinrichtung (501) vom sekundären Knoten (503) an einen anderen sekundären Knoten auf Basis der Bestimmung des Masterknotens (502).

10. Vorrichtung nach einem der Ansprüche 1-9, wobei der Masterknoten (502) ein Long-Term-Evolution-Knoten ist und der sekundäre Knoten (503) ein New-Radio-Knoten ist oder wobei der Masterknoten (502) ein New-Radio-Knoten ist und wobei der sekundäre Knoten (503) ein Long-Term-Evolution-Knoten ist oder
wobei der Masterknoten (502) und der sekundäre Knoten (503) New-Radio-Knoten sind.

11. Vorrichtung nach einem der Ansprüche 1-10, die ferner Folgendes umfasst:
Mittel zum Senden einer anderen Anforderung vom Masterknoten (502) an den sekundären Knoten (503) auf Basis der Messergebnisse, wobei die andere Anforderung eine Anzeige am Masterknoten (502) für den sekundären Knoten (503) zum Senden der Empfehlung für den Zielknoten umfasst.

12. Vorrichtung, die Folgendes umfasst:
Mittel zum Empfangen (710) einer Anforderung an einem sekundären Knoten (503) von einem Masterknoten (502) zum Melden von Messergebnissen oder einer Empfehlung für eine Zielzelle, wobei die Anforderung eine Anzeige einer vorbestimmten Zeitdauer umfasst, innerhalb der das Melden der Messergebnisse oder der Empfehlung für die Zielzelle durchzuführen ist;
Mittel zum Bestimmen (720), ob die Messergebnisse am sekundären Knoten (503) verfügbar sind; und
**gekennzeichnet durch**
Mittel zum Senden (730) der Messergebnisse oder der Empfehlung vom sekundären Knoten (503) an den Masterknoten (502), nur wenn die Messergebnisse innerhalb der vorbestimmten Zeitdauer verfügbar sind, um den sekundären Knoten freizugeben oder den sekundären Knoten in den Zielknoten zu ändern.

13. Vorrichtung nach Anspruch 12, die ferner Folgendes umfasst:
Mittel zum Senden einer Nachricht vom sekundären Knoten (503) an eine Teilnehmereinrichtung (501), die anfordert, dass die Teilnehmereinrichtung (501) Messungen durchführt;
Mittel zum Empfangen der Messungen am sekundären Knoten (503) von der Teilnehmereinrichtung (501) und
Mittel zum Vorbereiten der Messergebnisse oder der Empfehlung für den Zielknoten am sekundären Knoten (503) auf Basis der Messungen.

14. Vorrichtung nach einem der Ansprüche 12-13, die Folgendes umfasst:
Mittel zum Empfangen einer Messauslegung am sekundären Knoten (503) vom Masterknoten (502), wobei die Messauslegung mindestens eines von einem Ereignis oder einem Schwellwert umfasst, das bzw. der das Durchführen von Messungen durch den sekundären Knoten (503) oder die Teilnehmereinrichtung (501) auslöst.

15. Verfahren, das Folgendes umfasst:
Empfangen (213, 313, 413, 513) eines Messberichts von einer Teilnehmereinrichtung (501);
das Verfahren umfasst ferner Folgendes
Senden (610) einer Anforderung (215, 315, 415, 515) an einen sekundären Knoten (503), um mindestens eines von Messergebnissen oder einer Empfehlung für einen Zielknoten für den sekundären Knoten (503) zu melden, wobei der Masterknoten (502) eine vorbestimmte Zeitperiode wartet, um die Messergebnisse oder die Empfehlung für den Zielknoten vom sekundären Knoten (503) zu empfangen; und
**gekennzeichnet durch**
Bestimmen (630) nach Warten über die vorbestimmte Zeitperiode, den sekundären Knoten (503) freizugeben oder den sekundären Knoten (503) in den Zielknoten zu ändern, auch wenn die Messergebnisse oder die Empfehlung für den Zielknoten vom sekundären Knoten (503) nicht empfangen werden.

## Revendications

1. Appareil comprenant :
des moyens pour recevoir (213, 313, 413, 513) d'un équipement utilisateur (501), sur un nœud maître (502), un rapport de mesures ;
l'appareil comprenant en outre :
des moyens pour envoyer (610) une demande (215, 315, 415, 515) du nœud maître (502) à un nœud secondaire (503) pour rapporter au nœud secondaire (503) des résultats de mesures et/ou une recommandation pour un noeud cible,
des moyens pour que le nœud maître (502) attende de recevoir du nœud secondaire (503) les résultats de mesures ou la recommandation pour le nœud cible pendant un délai prédéterminé ; et
**caractérisé par**
des moyens pour déterminer (630), sur le nœud maître (502), de libérer le nœud secondaire ou de changer le nœud secondaire en nœud cible après avoir attendu pendant le délai prédéterminé, même lorsque les résultats de mesures ou la recommandation pour le nœud cible ne sont pas reçus du nœud secondaire (503).

2. Appareil selon la revendication 1, comprenant en outre :
des moyens pour recevoir (620) du nœud secondaire (503), sur le nœud maître (502), les résultats de mesures ou la recommandation pour le nœud cible, dans lequel la détermination de libérer le nœud secondaire ou de changer le nœud secondaire en nœud cible est basée au moins sur les résultats de mesures ou la recommandation reçus du nœud secondaire (503).

3. Appareil selon la revendication 1 ou 2, dans lequel la demande est envoyée du nœud maître (502) au nœud secondaire (503) via une interface entre le nœud maître (502) et le nœud secondaire (503).

4. Appareil selon l'une des revendications 1 à 3, comprenant en outre :
des moyens pour indiquer, via une valeur de temporisation d'attente, le délai prédéterminé à la suite duquel le nœud maître (502) détermine de libérer le nœud secondaire ou de changer le nœud secondaire en nœud cible, même lorsque les résultats de mesures ou la recommandation pour le nœud cible ne sont pas reçus du nœud secondaire (503).

5. Appareil selon la revendication 4, dans lequel la valeur de temporisation d'attente est comprise dans la demande (315, 415, 515).

6. Appareil selon l'une des revendications 1 à 5, comprenant en outre :
des moyens pour transmettre une configuration de mesures du nœud maître (502) au nœud secondaire (503) ou à l'équipement utilisateur (501), dans lequel la configuration de mesures comprend un événement et/ou un seuil qui déclenche la réalisation des mesures par l'équipement utilisateur (501).

7. Appareil selon la revendication 6, dans lequel la configuration de mesures est déterminée par le noeud maître (502) pour l'équipement utilisateur (501).

8. Appareil selon l'une des revendications 1 à 7, comprenant en outre :
des moyens pour libérer une cellule source sur la base au moins des résultats de mesures ou de la recommandation du nœud secondaire (503).

9. Appareil selon l'une des revendications 1 à 8, comprenant en outre :
des moyens pour initier un transfert de l'équipement utilisateur (501) du nœud secondaire (503) à un autre noeud secondaire sur la base de la détermination du nœud maître (502).

10. Appareil selon l'une des revendications 1 à 9, dans lequel le nœud maître (502) est un nœud d'évolution à long terme, et le nœud secondaire (503) est un nouveau nœud radio ; ou dans lequel le nœud maître (502) est un nouveau nœud radio, et dans lequel le nœud secondaire (503) est un nœud d'évolution à long terme ; ou dans lequel le nœud maître (502) et le nœud secondaire (503) sont de nouveaux nœuds radio.

11. Appareil selon l'une des revendications 1 à 10, comprenant en outre :
des moyens pour envoyer une autre demande du noeud maître (502) au nœud secondaire (503) sur la base des résultats de mesures, dans lequel l'autre demande comprend une indication pour que le nœud secondaire (503) envoie au nœud maître (502) la recommandation pour le noeud cible.

12. Appareil comprenant :
des moyens pour recevoir (710) d'un nœud maître (502), sur un noeud secondaire (503), une demande de rapporter des résultats de mesures ou une recommandation pour une cellule cible,
dans lequel la demande comprend une indication d'une durée prédéterminée pendant laquelle il faut réaliser le rapport des résultats de mesures ou la recommandation pour la cellule cible ;
des moyens pour déterminer (720) si les résultats de mesures sont disponibles sur le nœud secondaire (503) ; et
**caractérisé par**
des moyens pour envoyer (730) du nœud secondaire (503) au nœud maître (502), uniquement lorsque les résultats de mesures sont disponibles pendant la durée prédéterminée, les résultats de mesures ou la recommandation de libérer le nœud secondaire ou de changer le nœud secondaire en un nœud cible.

13. Appareil selon la revendication 12, comprenant en outre :
des moyens pour envoyer un message du noeud secondaire (503) à un équipement utilisateur (501) demandant que l'équipement utilisateur (501) réalise des mesures ;
des moyens pour recevoir de l'équipement utilisateur (501), sur le nœud secondaire (503), les mesures ; et
des moyens pour préparer, sur le nœud secondaire (503), les résultats de mesures ou la recommandation pour le nœud cible sur la base des mesures.

14. Appareil selon l'une des revendications 12 et 13, comprenant :
des moyens pour recevoir, sur le nœud secondaire (503), une configuration de mesures du nœud maître (502), dans lequel la configuration de mesures comprend un événement et/ou un seuil qui déclenche la réalisation des mesures par le nœud secondaire (503) ou l'équipement utilisateur (501).

15. Procédé, comprenant :
la réception (213, 313, 413, 513) d'un rapport de mesures d'un équipement utilisateur (501) ;
le procédé comprenant en outre :
l'envoi (610) d'une demande (215, 315, 415, 515) à un nœud secondaire (503) pour rapporter au nœud secondaire (503) des résultats de mesures et/ou une recommandation pour un noeud cible, dans lequel le nœud maître (502) attend de recevoir du noeud secondaire (503) les résultats de mesures ou la recommandation pour le nœud cible pendant un délai prédéterminé ; et
**caractérisé par**
la détermination (630) de libérer le nœud secondaire (503) ou de changer le nœud secondaire (503) en nœud cible après avoir attendu pendant le délai prédéterminé, même lorsque les résultats de mesures ou la recommandation pour le nœud cible ne sont pas reçus du nœud secondaire (503).
